# EUROPÄISCHE PATENTANMELDUNG

(11) **EP 3 451 510 A1**
(43) Veröffentlichungstag der Anmeldung: **06.03.2019**
(21) Anmeldenummer: 18173949.1
(22) Anmeldetag: 24.05.2018
(51) Int. Cl.: H02K 33/16, H02K 1/27, H01F 7/16, H02K 1/34, H02K 15/03, H01F 7/08, F16F 13/26

(54) **ELEKTROMAGNETISCHER LINEARAKTOR**

(30) Priorität: 31.08.2017 DE 102017215238
(71) Anmelder: ContiTech Vibration Control GmbH, 30165 Hannover (DE)
(72) Erfinder: Werhahn, Max, 30449 Hannover (DE); Genderjahn, Robert, 30625 Hannover (DE)
(74) Vertreter: Finger, Karsten

(57) **Zusammenfassung**

Die vorliegende Erfindung betrifft einen elektromagnetischen Linearaktor (1) mit einem feststehend angeordneten Ständer (12) und mit einem Anker (15), welcher vom Ständer (12) zumindest abschnittsweise in einer Umfangsrichtung (U) umgeben wird, wobei der Anker (15) relativ zum Ständer (12) in einer gemeinsamen Längsrichtung (X) beweglich ist, wobei radial zwischen dem Ständer (12) und dem Anker (15) zumindest abschnittsweise ein Luftspalt (19) ausgebildet wird. Der elektromagnetische Linearaktor (1) ist gekennzeichnet durch eine Mehrzahl von Magneten (16), vorzugsweise von Permanentmagneten (16), welcher am Ständer (12) und/oder am Anker (15) in Umfangsrichtung (U) nebeneinander angeordnet sind, wobei die Magnete (16) ausgerichtet sind, so dass der magnetische Fluss (B) jedes Magneten (16) im Wesentlichen radial und mit der gleichen Richtung des magnetischen Flusses (B) ausgerichtet ist, wobei die Magnete (16) gegenüber dem Luftspalt (19) und/oder gegenüber dem Anker (15) oder gegenüber dem Ständer (12) eben ausgebildet sind.

## Beschreibung

Die vorliegende Erfindung betrifft einen elektromagnetischen Linearaktor gemäß dem Oberbegriff des Patentanspruchs 1.

Zur Isolation von Schwingungen sind verschiedene Arten und Ausführungen von Lagern bekannt. Zu diesen gehören die sog. Hydrolager oder auch Hydrauliklager. Sie dienen zur elastischen Abstützung von Aggregaten, insbesondere von Kraftfahrzeugmotoren. Mit Hilfe derartiger z. B. zwischen einem Motor und einem Chassis eines Kraftfahrzeugs angeordneter Hydrolager soll verhindert werden, dass sich Motor-Vibrationen auf das Fahrzeuggestell übertragen.

Bei einem Hydrolager kann eine Flüssigkeit wie z.B. eine Hydraulikflüssigkeit zwischen einer Arbeitskammer und einer Ausgleichkammer über einen Drosselkanal hin und her bewegt werden. Eine Drosseleinheit trennt das Flüssigkeitsvolumen zwischen der Arbeitskammer und der Ausgleichskammer und bildet den Drosselkanal aus, der die Arbeitskammer und die Ausgleichskammer verbindet. Da der Drosselkanal einen Strömungswiderstand darstellt, können Schwingungen, welche über eine Tragfeder wie üblicherweise ein Elastomerelement auf die Arbeitskammer wirken, durch die Flüssigkeitsbewegungen durch den Drosselkanal hindurch gedämpft werden. Hierbei werden Schwingungen bis üblicherweise ca. 5 Hz durch die relativ große Steifigkeit der Tragfeder aufgenommen. Niederfrequente Schwingungen zwischen üblicherweise 5 Hz bis 20 Hz werden durch das Zusammenwirken der beiden Hydraulikkammern über den Drosselkanal gedämpft.

Es lassen sich verschiedene Arten von Hydrolagern unterscheiden:
Sog. konventionelle Hydrolager weisen den zuvor beschriebenen Aufbau und die hiermit verbundene Wirkungsweise auf, indem üblicherweise die Innenseite der elastischen Tragfeder und die eine Seite der Drosseleinheit die Arbeitskammer und eine elastische Rollmembran und die gegenüberliegende Seite der Drosseleinheit die Ausgleichkammer bilden. Die elastische Rollmembran führt zu einem variablen Volumen der Ausgleichskammer, so dass es hierdurch der üblicherweise inkompressiblen Flüssigkeit ermöglicht wird, aus der Arbeitskammer entweichen zu können. Alternativ oder zusätzlich kann auch eine elastische Entkopplungsmembran vorhanden sein, die einen elastischen Druckausgleich zwischen den beiden Hydraulikkammern ermöglichen kann. Bewegliche Teile sind außer der Elastizität der Tragfeder, der Rollmembran und bzw. oder der Entkopplungsmembran bei konventionellen Hydrolager üblicherweise nicht vorhanden.

Sog. schaltbare Hydrolager weisen grundsätzlich den gleichen Aufbau und die gleiche Wirkungsweise wie konventionelle Hydrolager auf. Zusätzlich zum Drosselkanal ist bei schaltbaren Hydrolagern jedoch ein Bypasskanal vorhanden, dessen Durchfluss schaltbar geöffnet und geschlossen werden kann. Alternativ kann auch ein Kanal zur Entlüftung einer Luftkammer unterhalb der Entkopplungsmembran schaltbar geöffnet und geschlossen werden. In beiden Fällen können durch das Öffnen bzw. Verschließen des jeweiligen Kanals zwei unterschiedliche Kennlinienverläufe der Steifigkeits- und Dämpfungscharakteristika des Lagers gewählt werden, so dass das Lager zwischen "weich" und "hart" geschaltet werden kann. Mit anderen Worten kann auf diese Art und Weise in bestimmten Situationen eine andere Steifigkeit des schaltbaren Hydrolagers eingestellt werden als im übrigen Betrieb. Diese Schaltfunktion kann durch einen elektromagnetischen Aktor ausgeführt werden.

Sog. steuerbare oder auch aktive Hydrolager entsprechen ebenfalls grundsätzlich dem Aufbau und der Wirkungsweise von konventionellen Hydrolagern, weisen jedoch eine steuerbare Möglichkeit auf, das Volumen der Arbeitskammer stufenlos zu verändern. Auf diese Weise kann aktiv auf das Isolationsverhalten des Hydrolagers eingewirkt werden. Die Steuerbarkeit wird üblicherweise über einen linear wirkenden elektromagnetischen Aktor erreicht, welcher eine Steuermembran z.B. über einen Kolben gegenüber der Arbeitskammer bewegen kann. Die Steuermembran bildet dabei einen Teil der Wandung der Arbeitskammer, so dass sich über die Bewegung der Steuermembran das Hydraulikvolumen der Arbeitskammer verändern lässt. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden.

Bei den steuerbaren bzw. aktiven Hydrolagern lässt sich zwischen konventionellen steuerbaren Hydrolagern und invertierten steuerbaren Hydrolagern unterscheiden. Bei den konventionellen steuerbaren Hydrolagern drückt das Fluid direkt von der Seite der Arbeitskammer auf die Membran, die der Arbeitskammer zugewandt ist, d.h. üblicherweise von oben von der Seite der Tragfeder her. Bei invertierten steuerbaren Hydrolagern drückt die Membran von der Seite der Ausgleichskammer bzw. von der Seite des Drosselkanals auf die Membran, d.h. üblicherweise von unten von der Seite des Aktors her. In diesem Fall befindet sich üblicherweise ein konstruktionsbedingt geschlossenes Luftvolumen hinter der Membran, welches vollkommen von der Umgebung abgetrennt ist.

Alle zuvor beschriebenen Arten von Hydrolagern können als Motorlager eingesetzt werden.

Um die Steuerbarkeit der Membran sowohl bei konventionellen als auch bei invertieren steuerbaren bzw. aktiven Hydrolagern realisieren zu können, ist es bekannt, einen linear wirkenden elektromagnetischen Aktor, auch Linearaktor genannt, einzusetzen, wie bereits zuvor erwähnt. Üblicherweise wird der Stator des Linearaktor, welcher üblicherweise die Spule aufweist, am bzw. im Gehäuse des Hydrolagers angeordnet. Dabei wird der Stator üblicherweise von der Ausgleichskammer samt Rollmembran umgeben. Der Anker des Linearaktors ist üblicherweise innerhalb des Stators und gegenüber dem Stator in der Höhe, d.h. zur Arbeitskammer hin sowie von der Arbeitskammer weg, linear beweglich angeordnet. Der Anker ist üblicherweise über einen Stößel mit der Steuermembran verbunden, so dass durch die Bewegung des Ankers des Linearaktors die Steuermembran auf das Hydraulikvolumen der Arbeitskammer einwirken kann.

Um einen magnetischen Kreis zu erhalten, ist ferner ein Magnet erforderlich. Als Magnet wird üblicherweise ein Permanentmagnet verwendet, um die Notwendigkeit einer Bestromung des Magneten zu vermeiden. Es sind verschiedene Anordnungen der Spule und des Magneten hinsichtlich des Stators bzw. Ständers und des Ankers möglich.

Die DE 198 39 464 C2 beschreibt einen Aktuator mit einem Magneten und einer Spule, welche sich radial gegenüberliegen. Der Magnet ist in einen ferromagnetischen Mantel eingebettet. Die Spule ist um einen ferromagnetischen Kern bzw. Anker gewickelt. Entweder ist der Magnet samt Mantel statisch gelagert und die Spule samt Kern ist federnd gelagert und kann Schwingungen ausführen oder umgekehrt.

Die DE 10 2014 211 949 A1 beschreibt einen elektromagnetischen Linearaktor. Der bewegliche Anker bzw. Kern ist dabei als reines ferromagnetisches Leitelement ausgebildet, da sowohl die Spule als auch der Magnet feststehend am Stator bzw. Ständer angeordnet sind. Der Magnet kann dabei in der Bewegungsrichtung des Ankers unterhalb und oberhalb der Spule angeordnet sein. Alternativ kann der Magnet auch radial zwischen der Spule und dem Anker am Stator bzw. Ständer angeordnet sein.

Derartige Aktuatoren sind üblicherweise zylindrisch aufgebaut, so dass ein üblicherweise beweglicher Anker bzw. Kern als zylindrischer Körper radial innerhalb eines Ständers bzw. Stators angeordnet ist und Ständer den Anker in Umfangsrichtung zylindrisch geschlossen umgibt. In der Längsrichtung ist der Anker gegenüber dem Ständer beweglich, um die Membran des Hydrolagers zu bewegen.

Nachteilig ist bei derartigen Aktoren, dass der zylindrische Ständer oder Anker eigentlich mit einem in Umfangsrichtung geschlossenen ringförmigen Permanentmagneten ausgestattet sein müsste, welcher radial magnetisiert ist. Ein in Umfangsrichtung geschlossener ringförmiger radial magnetisierter Permanentmagnet ist jedoch gar nicht herstellbar. Soll dieser Permanentmagnet aus einzelnen Bogensegmenten aufgebaut werden, scheitert dies daran, dass radial magnetisierte Bogensegmente ebenfalls nicht herstellbar sind. Daher muss auf diametral magnetisierte Bogensegmente zurückgegriffen werden, deren Herstellung möglich ist.

Nachteilig ist bei diametral magnetisierten Bogensegmenten jedoch, dass die Herstellung sehr aufwendig und kostenintensiv ist. Ein weiterer Nachteil von diametral magnetisierten Bogensegmenten ist, dass bei Toleranzabweichungen die Gefahr besteht, dass der Magnet nicht bündig am Anker anliegt. Dadurch kann der magnetische Fluss gestört werden und Krafteinbußen können die Folge sein.

Nachteilig ist bei der Verwendung diametral magnetisierter Bogensegmente auch, dass nur geringfügige Toleranzen zulässig sind, um die bogenförmige Innenseite des diametral magnetisierten Bogensegments flächig z.B. an der zylindrischen Außenseite des Ankers anliegen zu lassen. Diese geringen Toleranzen können ebenfalls zu höheren Kosten der Herstellung führen.

Eine Aufgabe der vorliegenden Erfindung ist es, einen elektromagnetischen Linearaktor der eingangs beschriebenen Art bereit zu stellen, welcher kostengünstiger herzustellen ist. Zumindest soll eine Alternativ für bekannte elektromagnetische Linearaktoren bereitgestellt werden.

Die Aufgabe wird erfindungsgemäß durch einen elektromagnetischen Linearaktor mit den Merkmalen gemäß Patentanspruch 1 gelöst. Vorteilhafte Weiterbildungen sind in den Unteransprüchen beschrieben.

Somit betrifft die vorliegende Erfindung einen elektromagnetischer Linearaktor mit einem feststehend angeordneten Ständer und mit einem Anker, welcher vom Ständer zumindest abschnittsweise in einer Umfangsrichtung umgeben wird. Vorzugsweise ist der Ständer ringförmig geschlossen und der Anker ist zylindrisch ausgebildet. Der Anker ist relativ zum Ständer in einer gemeinsamen Längsrichtung beweglich. Radial zwischen dem Ständer und dem Anker wird zumindest abschnittsweise ein Luftspalt ausgebildet.

Der erfindungsgemäße elektromagnetische Linearaktor ist durch eine Mehrzahl von Magneten, vorzugsweise von Permanentmagneten, gekennzeichnet, welcher am Ständer und bzw. oder am Anker in Umfangsrichtung nebeneinander angeordnet sind, wobei die Magnete ausgerichtet sind, so dass der magnetische Fluss jedes Magneten im Wesentlichen radial und mit der gleichen Richtung des magnetischen Flusses ausgerichtet ist, wobei die Magnete gegenüber dem Luftspalt und bzw. oder gegenüber dem Anker oder gegenüber dem Ständer eben ausgebildet sind.

Der vorliegenden Erfindung liegt dabei die Erkenntnis zugrunde, dass auf vergleichsweise teure bogenförmige Magnete und insbesondere auf diametral magnetisierte Bogensegmente als Permanentmagnete verzichtet werden kann, indem eben ausgebildete Magnete verwendet werden. Unter eben ausgebildeten Magneten können auch flach oder flächig ausgebildete Magnete verstanden werden. Dies kann die Herstellungskosten des elektromagnetischen Linearaktors deutlich reduzieren, so dass dieser kostengünstiger hergestellt werden kann. Dies kann zu einem Kostenvorteil führen.

Alternativ ist es jedoch auch möglich, die reduzierten Herstellungskosten zumindest teilweise in größere bzw. leistungsstärkere und hierdurch teurere Magnete und insbesondere Permanentmagnete zu investieren werden, ohne die Gesamtkosten des elektromagnetischen Linearaktors zu erhöhen. Hierdurch kann ein leistungsstärkerer elektromagnetischer Linearaktor zu den gleichen oder zu geringeren Kosten geschaffen werden.

Unter einer Ebene wird dabei ein unbegrenzt ausgedehntes flaches zweidimensionales Objekt verstanden, so dass auch ein eben oder flach ausgebildeter Magnet wenigstens eine Seite aufweist, welche rein zweidimensional ausgebildet ist. Dabei kann der Magnet eine ebene Seite aufweisen, welche zumindest im Wesentlichen senkrecht zum Luftspalt hin orientiert ist. Alternativ oder zusätzlich kann der Magnet eine ebene Seite aufweisen, welche dem Anker bzw. dem Ständer zugewandt ist. Vorzugsweise weist der Magnet zwei eben Seiten wie zuvor beschrieben auf, welche parallel zueinander ausgerichtet sind.

Vorteilhaft ist hierbei auch, dass bei einer ebenen Kontaktfläche der Magnete gegenüber dem Anker bzw. dem Ständer deutlich höhere Toleranzen zugelassen werden können als bei dem Zusammenpassen zweier bogenförmiger Kontaktflächen. Auch diese größeren zulässigen Toleranzen können die Herstellungskosten eines erfindungsgemäßen elektromagnetischen Linearaktors reduzieren.

Als Magnete vorzugsweise Permanentmagnete zu verwenden kann vorteilhaft sein, da hierdurch auf eine elektrische Versorgung und insbesondere elektrische Versorgungsleitungen verzichtet werden kann. Dies könnte insbesondere bei der Anordnung der Magnete auf dem beweglichen Anker störend sein. Nichtsdestotrotz können als Magnete auch Elektromagnete verwendet werden. Auch kann eine Kombination aus Permanentmagneten und Elektromagneten verwendet werden.

Auf jeden Fall ist es möglich, die vorliegende Erfindung bei einem elektromagnetischen Linearaktor anzuwenden, bei dem die Magnete auf dem Anker oder an dem Ständer angeordnet sind. Auch können ein Teil der Magnete am Anker und ein Teil der Magnete am Ständer angeordnet sein.

Gemäß einem Aspekt der vorliegenden Erfindung sind die Magnete zumindest teilweise als Quader oder als Quader mit bogenförmiger radialer Außenseite ausgebildet.

Unter einem Quader wird ein Körper verstanden, welcher von sechs Rechtecken begrenzt wird. Ein derartig geformter Magnet kann besonders einfach und damit kostengünstig herzustellen sein. Zusätzlich oder alternativ kann ein derartig geformter Magnet sehr einfach mit hoher Genauigkeit herzustellen sein, so dass ein quaderförmiger Magnet auch mit geringem Aufwand eine hohe Maßgenauigkeit aufweisen kann. Dies kann für eine genaue Positionierung am Anker bzw. am Ständer vorteilhaft sein.

Unter einem Quader mit bogenförmiger radialer Außenseite wird ein derartiger Körper verstanden, dessen radiale Außenseite in Umfangsrichtung gebogen ist. Das Maß des Bogens entspricht dabei vorzugsweise der Form des Ankers, so dass sich nach radial außen ein in Umfangsrichtung sowie in axialer Richtung bündiger Abschluss zwischen den Magneten und dem Anker ergibt. Vorteilhaft ist in diesem Fall, dass das Volumen des Ankers möglichst vollständig ausgenutzt werden kann, um eine möglichst starke magnetische Wirkung zwischen Anker und Ständer zu erreichen. Ferner kann hierdurch ein möglichst radial wirkendes Magnetfeld durch den Luftspalt seitens des Ankers erzeugt werden.

Gemäß einem weiteren Aspekt der vorliegenden Erfindung sind die Magnete lediglich am Anker angeordnet. Hierdurch kann die vorliegende Erfindung bei einem elektromagnetischen Linearaktor des Typs, welcher Permanentmagnete am Anker und die Spule am Ständer aufweist, umgesetzt werden.

Gemäß einem weiteren Aspekt der vorliegenden Erfindung weist der Anker einen Ankerkern auf, welcher eine Mehrzahl von Magnetaufnahmen aufweist, welche in Umfangsrichtung nebeneinander angeordnet sind, wobei jede Magnetaufnahme wenigstens einen Magneten, vorzugsweise genau einen Magneten, aufweist, wobei die Magnetaufnahmen zumindest abschnittsweise eben ausgebildet sind. Durch aufeinander abgestimmte Magnetaufnahmen und Magnete kann eine möglichst genaue Passung zwischen diesen Körpern erreicht werden. Auch kann die Montage der Magnete am Ankerkern erleichtert werden.

Gemäß einem weiteren Aspekt der vorliegenden Erfindung weist der Ankerkern eine Mehrzahl von Abstandshaltern auf, welche jeweils in Umfangsrichtung zwischen zwei unmittelbar benachbarten Magnetaufnahmen angeordnet sind. Hierdurch kann die Positionierungsgenauigkeit der Magnete zum Ankerkern sowie zueinander verbessert werden. Auch kann die Montage der Magnete am Ankerkern erleichtert werden.

Gemäß einem weiteren Aspekt der vorliegenden Erfindung ist wenigstens ein Abstandshalter, vorzugsweise sind mehrere Abstandshalter, besonders vorzugsweise sind alle Abstandshalter, an einem unteren Ankerjoch oder an einem oberen Ankerjoch ausgebildet. Unter einem Ankerjoch wird ein Abschnitt des Ankers verstanden, welcher in Längsrichtung unterhalb oder oberhalb der Magnete über diese radial hinaus Richtung Luftspalt ragt und dem Schluss des magnetischen Kreises dient. Wenigstens einen Abstandshalter an einem Ankerjoch anzuordnen kann dahingehend vorteilhaft sein, dass zwei unmittelbar benachbarte Magnete von dem Ankerjoch in der Längsrichtung einseitig umgriffen werden können und ein an dem Ankerjoch angeordneter Abstandshalter diese beiden Magnete in Umfangsrichtung zueinander beabstanden und definiert positionieren kann. Hierdurch kann ein Beabstandung und Positionierung der Magnete einfach umgesetzt werden.

Gemäß einem weiteren Aspekt der vorliegenden Erfindung ist wenigstens ein Abstandshalter, vorzugsweise sind mehrere Abstandshalter, besonders vorzugsweise sind alle Abstandshalter, in der Längsrichtung unterbrochen ausgebildet. Mit anderen Worten erstreckt sich der Abstandshalter lediglich ein Stück in der Längsrichtung. Hierdurch kann die Wirkung des Abstandhalters mit weniger Material und damit mit weniger Gewicht des Ankers erreicht werden. Ferner kann der Freiraum, d.h. die Aussparung, welche in der Längsrichtung neben dem Abstandshalter gebildet wird, z.B. zur Anordnung bzw. zur Befestigung für ein Gleitlager genutzt werden, welches in dem Luftspalt zumindest abschnittsweise angeordnet werden kann.

Gemäß einem weiteren Aspekt der vorliegenden Erfindung weist der Ankerkern einen unteren Ankerkern und einen oberen Ankerkern auf, welche einstückig ausgebildet und zum Ankerkern verbunden sind. Hierdurch kann der Ankerkern einfacher und kostengünstiger hergestellt werden.

Gemäß einem weiteren Aspekt der vorliegenden Erfindung weist der Anker ein unteres Ankerjoch und ein oberes Ankerjoch auf, welche die Magnete in der Längsrichtung beidseitig radial umgreifen. Hierdurch kann der magnetische Schluss, welcher durch ein Ankerjoch erreicht werden kann, beidseitig der Magnete genutzt werden. Dies kann zu einem gleichmäßigeren magnetischen Fluss führen.

Gemäß einem weiteren Aspekt der vorliegenden Erfindung ist der Anker, vorzugsweise ein unterer Ankerkern samt unterem Ankerjoch und ein oberer Ankerkern samt oberen Ankerjoch, (jeweils) durch einen gepressten Eisenpulverwerkstoff ausgebildet. Hierdurch kann die erfindungsgemäße Kontur des Ankers einfach und kostengünstig hergestellt werden. Würde eine derartige Kontur aus Stahl gefräst werden, wäre dies zwar möglich jedoch aufwendig und damit teurer. Eine Herstellung als Drehteil wäre aufgrund der vieleckigen Kontur des Ankers gar nicht möglich.

Zwei Ausführungsbeispiele und weitere Vorteile der Erfindung werden nachstehend im Zusammenhang mit den folgenden Figuren erläutert. Darin zeigt:
- Fig. 1: eine schematische Schnittdarstellung eines elektromagnetischen Linearaktors,
- Fig. 2: eine schematische Schnittdarstellung eines radial magnetisierten Magneten als Bogensegment;
- Fig. 3: eine schematische Schnittdarstellung eines diametral magnetisierten Magneten als Bogensegment;
- Fig. 4a: eine perspektivische schematische Darstellung eines Ankers mit magnetischen Bogensegmenten;
- Fig. 4b: einen unteren Teil des Ankers der Fig. 4a;
- Fig. 5: eine schematische Draufsicht auf den unteren Teil des Ankers der Fig. 4b mit einem passenden magnetischen Bogensegment;
- Fig. 6: die Darstellung der Fig. 5 mit einem randseitig klemmenden magnetischen Bogensegment;
- Fig. 7: die Darstellung der Fig. 5 mit einem mittig klemmenden magnetischen Bogensegment;
- Fig. 8a: eine perspektivische schematische Darstellung eines Ankers eines erfindungsgemäßen Linearaktors gemäß eines ersten Ausführungsbeispiels mit quaderförmigen Magneten;
- Fig. 8b: den Anker der Fig. 8a ohne quaderförmige Magnete;
- Fig. 9: eine perspektivische schematische Darstellung des unteren Teils des Ankers der Fig. 8b;
- Fig. 10: eine perspektivische schematische Darstellung eines Ankers eines erfindungsgemäßen Linearaktors gemäß eines zweiten Ausführungsbeispiels mit quaderförmigen Magneten;
- Fig. 11a: eine perspektivische schematische Darstellung eines Magneten der Fig. 10; und
- Fig. 11b: eine schematische Draufsicht auf einen Magneten der Fig. 10.

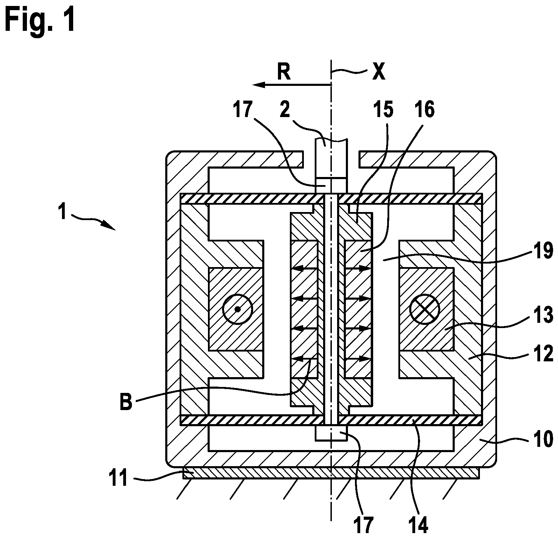

Fig. 1 zeigt eine schematische Schnittdarstellung eines elektromagnetischen Linearaktors 1, welcher auch als Aktuator 1 bezeichnet werden kann. Der Aktuator 1 kann beispielsweise als Bestandteil eines steuerbaren bzw. aktiven Hydrolagers eines Kraftfahrzeugs verwendet werden. Der Aktuator 1 ist insgesamt zylindrisch ausgebildet. Entsprechend erstreckt sich eine Längsrichtung X mittig durch den Aktuator 1 hindurch. Senkrecht zur Achse der Längsrichtung X erstreckt sich eine radiale Richtung R. Um die Achse der Längsrichtung X herum und senkrecht zur radialen Richtung R erstreckt sich eine Umfangsrichtung U.

Der Aktuator 1 weist ein Gehäuse 10 auf, welches über eine Gehäusebefestigung 11 z.B. mit der Karosserie eines Kraftfahrzeugs feststehend verbunden sein kann. Innerhalb des Gehäuses 10 ist radial außenseitig und feststehend mit dem Gehäuse 10 verbunden ein Ständer 12 angeordnet, welcher auch als Stator 12 bezeichnet werden kann. Der Ständer 12 nimmt eine Spule 13 auf und umschließt diese in der Längsrichtung X beidseitig radial nach innen. Die Spule 13 kann elektrisch betrieben werden, um ein Magnetfeld zu erzeugen, welches über den Ständer 12 fließen kann.

Radial innerhalb des Ständers 12 ist auf der Achse der Längsrichtung X ein Anker 15 angeordnet. Der Anker 15 weist eine Mehrzahl von Permanentmagneten 16 auf, welche gemeinsam ein radial nach außen gerichtetes Magnetfeld mit einer magnetischen Flussrichtung B erzeugen. Der Anker 15 und der Ständer 12 sind radial zueinander durch einen Luftspalt 19 beabstandet. Der Anker 15 umschließt die Permanentmagnete 16 in der Längsrichtung X beidseitig radial nach außen.

Das Magnetfeld der Permanentmagnete 16 kann sich somit von den Permanentmagneten 16 radial durch den Luftspalt 19 in die Spule 13 richten und von dort über den Ständer 12 beidseitig in der Längsrichtung X unterhalb und oberhalb der Spule 13 durch den Luftspalt 19 zurück in den Anker 15 und in die Permanentmagnete 16 fließen. Durch den Betrieb der Spule 13 kann das Magnetfeld der Permanentmagnete 16 gezielt beeinflusst werden.

Der Anker 15 ist in der Längsrichtung X beidseitig unterhalb und oberhalb mit jeweils einer Membranfeder 14 mit dem Ständer 12 bzw. mit dem Gehäuse 10 schwingungsfähig verbunden. Die Membranfedern 14 sind jeweils über eine Membranbefestigung 17 an dem Anker 15 bzw. an einer Steuermembranbefestigung 2 befestigt, welche mittig durch den Anker 15 bzw. durch eine Aussparung 18 des Ankers 15 hindurchführt und in der Längsrichtung X nach oben aus dem Aktuator 1 herausragt, um eine Steuermembran eines steuerbaren bzw. aktiven Hydrolagers des Kraftfahrzeugs (nicht dargestellt) bewegen zu können.

Der Anker 15 kann durch den Betrieb der Spule 13 und die Wechselwirkung der Magnetfelder der Spule 13 und der Permanentmagnete 16 gezielt in der Längsrichtung X nach oben und nach unten ausgelenkt werden. Hierdurch kann die Bewegung der Steuermembran erfolgen.

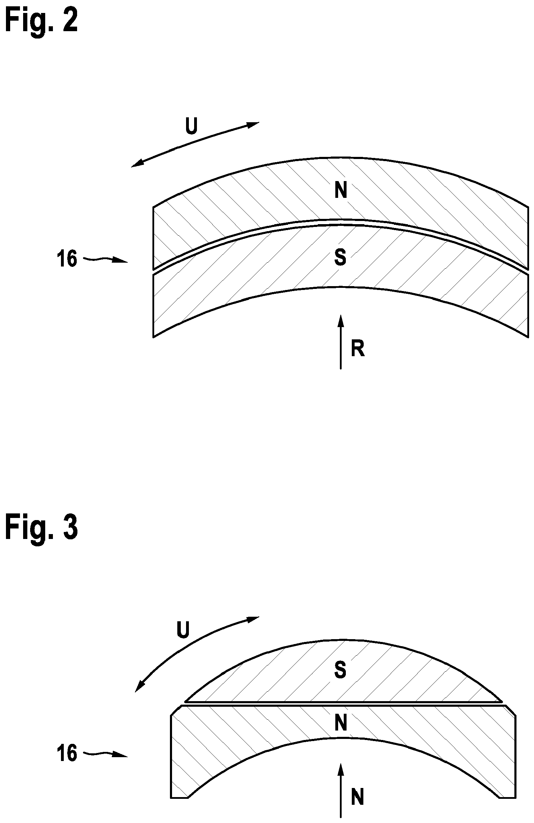

Um einen derartigen zylindrischen Anker 15 mit Permanentmagneten 16 als Bogensegmente ausstatten zu können, müssten idealerweise radial magnetisierte Bogensegmente 16 verwendet werden, siehe Figur 2. Derartige radial magnetisierte Bogensegmente 16 sind jedoch nicht herstellbar.

Alternativ ist es daher üblich, sich durch die Verwendung von diametral magnetisierten Bogensegmenten 16, siehe Figur 3, den radial magnetisierte Bogensegmente 16 anzunähern. Dies führt jedoch zu einem abweichenden Verlauf des magnetischen Feldes. Ferner sind diametral magnetisierte Bogensegmente 16 vergleichsweise aufwendig und teuer in der Herstellung.

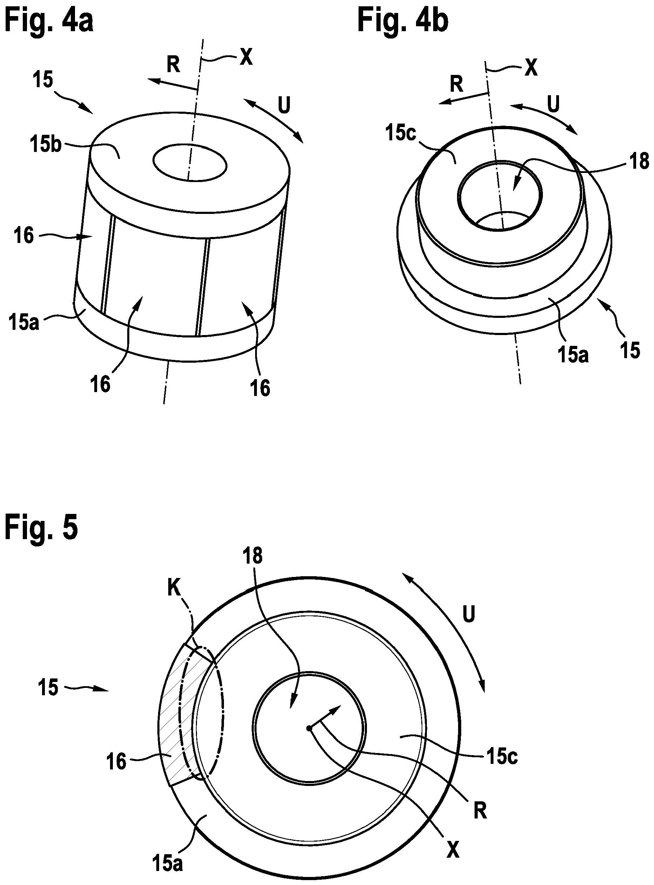

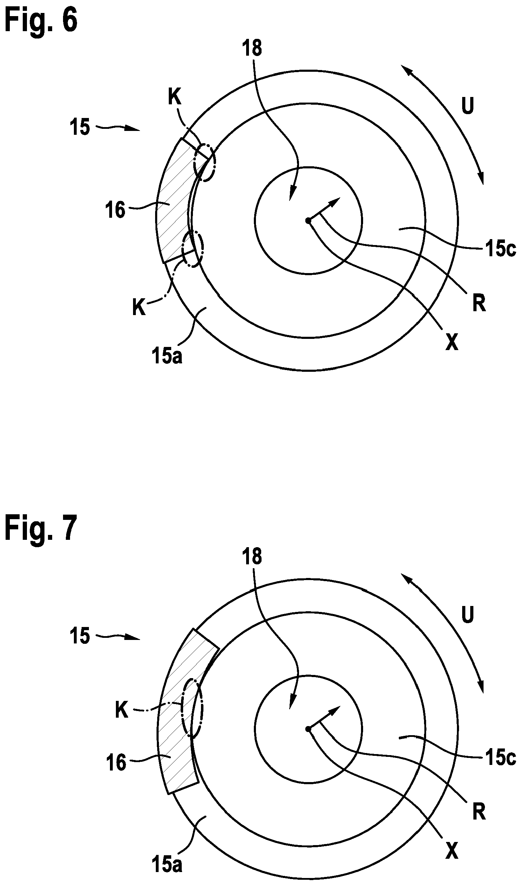

Problematisch ist bei magnetischen Bogensegmenten 16 ferner allgemein, dass eine hohe Maßgenauigkeit erforderlich ist, um aus den einzelnen Bogensegmenten 16 einen geschlossenen Zylinder herzustellen. Dies erfordert auf der radialen Innenseite der magnetischen Bogensegmente 16 eine möglichst ideale Anlagefläche im Kontaktbereich K, siehe Figur 5. Werden die Toleranzen der Maßgenauigkeit zu gering gewählt, können lediglich die in Umfangsrichtung U äußeren Kontaktbereiche K an dem Anker 15 anliegen und der in Umfangsrichtung U dazwischenliegende Bereich steht radial kontaktlos ab, siehe Figur 6. Werden die Toleranzen der Maßgenauigkeit zu groß gewählt, kann lediglich der in Umfangsrichtung U mittige Kontaktbereich K an dem Anker 15 anliegen und die beiden in Umfangsrichtung U äußeren Bereich stehen radial kontaktlos ab, siehe Figur 7. Dies führt jeweils zu einem vergleichsweise unsicheren Halt der magnetischen Bogensegmente 16 an dem Anker 15 sowie zu einer ungewünschten und ungleichmäßigen Ausbildung bzw. Verengung des Luftspalts 19.

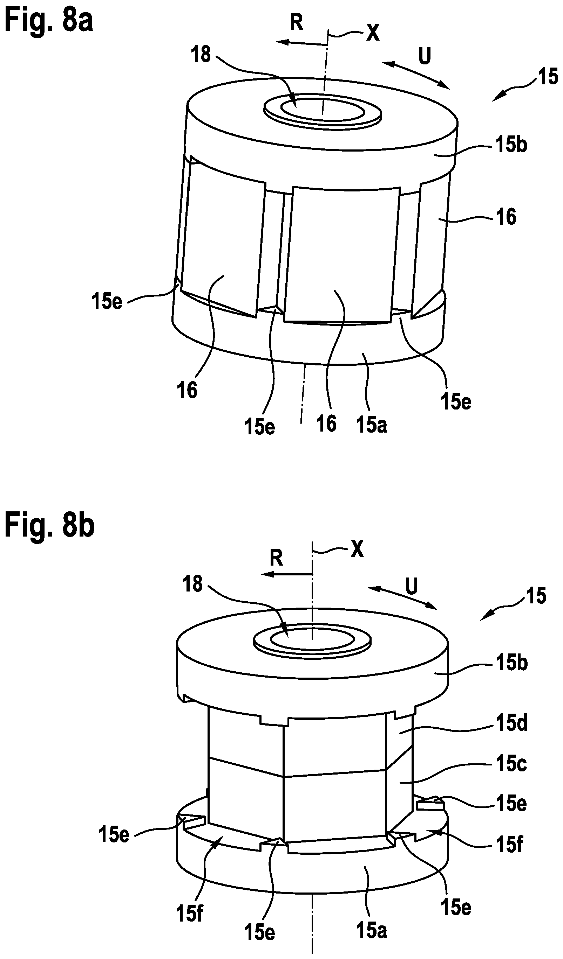

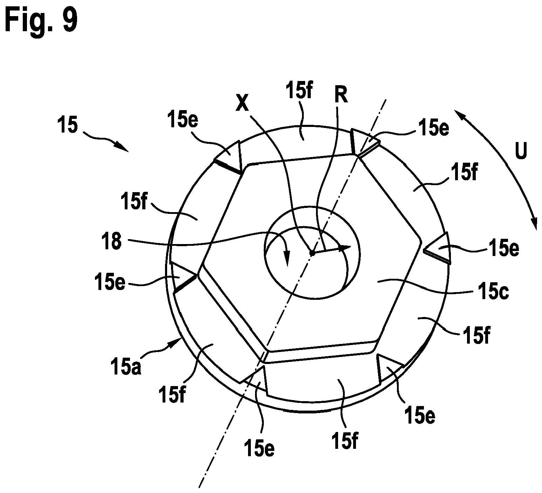

Erfindungsgemäß wird daher, wie in den Figuren 8a, 8b und 9 gemäß eines ersten Ausführungsbeispiels dargestellt, der Anker 15 des Aktuators 1 vieleckig wie z.B. sechseckig ausgebildet, so dass sich an der radialen Außenseite des Ankers 15 ebene Magnetaufnahmen 15f ausbilden. Auf den ebenen Magnetaufnahmen 15f können quaderförmige Permanentmagnete 16 angeordnet werden, welche einfacher und kostengünstiger hergestellt werden können als die diametral magnetisierten Bogensegmente 16 der Figur 3. Hierdurch kann ein vergleichbares Magnetfeld des Ankers 15 zu deutlich geringen Kosten erreicht werden, so dass entweder Kosten für den Aktuator 1 gespart oder zu den gleichen Kosten leistungsstärkere und teurere Permanentmagnete 16 verwendet werden können.

Die Permanentmagnete 16 werden dabei von Abstandshaltern 15e seitlich gehalten und durch diese positioniert. Die Abstandshalter 15e sind jeweils an einem unteren Ankerjoch 15a eines unteren Ankerkerns 15c und an einem oberen Ankerjoch 15b eines oberen Ankerkerns 15d in Umfangsrichtung U zueinander versetzt und beidseitig der jeweiligen Magnetaufnahmen 15f angeordnet. Die Abstandshalter 15e sind ferner jeweils einstückig mit dem unteren Ankerjoch 15a bzw. mit dem oberen Ankerjoch 15b ausgebildet. Die beiden Ankerkerne 15c, 15d sind jeweils einstückig aus einem gepressten Eisenpulverwerkstoff ausgebildet und werden zum Anker 15 verbunden. Die beiden Ankerjoche 15a, 15b sind jeweils einstückig mit dem entsprechenden Ankerkern 15c, 15d ausgebildet.

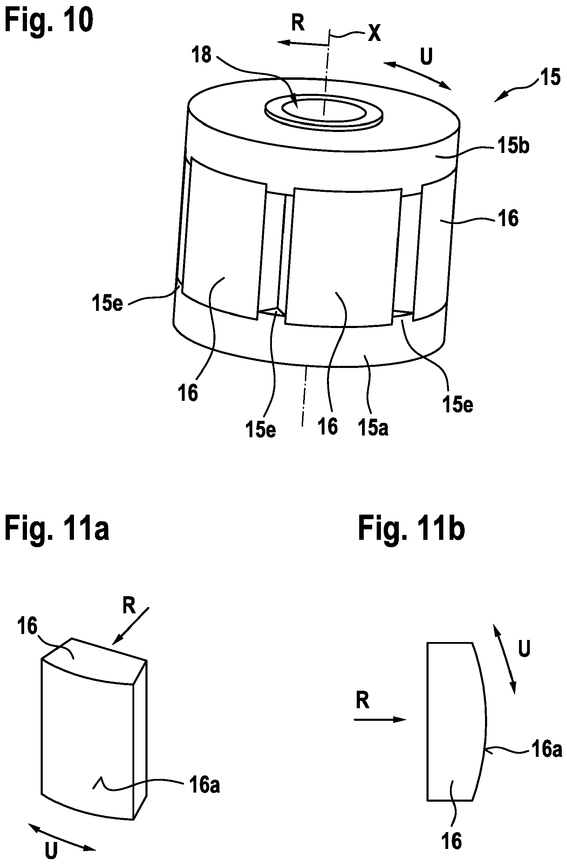

Fig. 10 zeigt eine perspektivische schematische Darstellung eines Ankers 15 eines erfindungsgemäßen Linearaktors 1 gemäß eines zweiten Ausführungsbeispiels mit quaderförmigen Magneten 16. Fig. 11a zeigt eine perspektivische schematische Darstellung eines Magneten 16 der Fig. 10. Fig. 11b zeigt eine schematische Draufsicht auf einen Magneten 16 der Fig. 10.

Gemäß dieses zweiten Ausführungsbeispiels sind die Magnete 16 zwar grundsätzlich ebenfalls als Quader ausgebildet, weisen jedoch jeweils eine radial nach außen gerichtete bogenförmige Außenseite 16a auf, so dass sich in Umfangsrichtung U im Wesentlichen eine zylindrische Kontur des Ankers 15 ergibt.

### Bezugszeichenliste (Teil der Beschreibung)

- B: magnetische Flussrichtung
- K: Kontaktbereich
- N: Nordpol des Magneten 16
- R: radiale Richtung
- S: Südpol des Magneten 16
- U: Umfangsrichtung
- X: Längsrichtung; vertikale Richtung; Höhe

- 1: elektromagnetischer Linearaktor; Aktuator
- 10: Gehäuse
- 11: Gehäusebefestigung
- 12: Ständer; Stator
- 13: Spule
- 14: Membranfeder
- 15: Anker
- 15a: unteres Ankerjoch
- 15b: oberes Ankerjoch
- 15c: unterer Ankerkern
- 15d: oberer Ankerkern
- 15e: Abstandshalter
- 15f: Magnetaufnahme
- 16: Magnete; Permanentmagnete
- 16a: radiale Außenseite der Magnete 16
- 17: Membranbefestigung
- 18: Aussparung des Ankers 15
- 19: Luftspalt

- 2: Steuermembranbefestigung

## Patentansprüche

1. Elektromagnetischer Linearaktor (1),
mit einem feststehend angeordneten Ständer (12), und
mit einem Anker (15), welcher vom Ständer (12) zumindest abschnittsweise in einer Umfangsrichtung (U) umgeben wird,
wobei der Anker (15) relativ zum Ständer (12) in einer gemeinsamen Längsrichtung (X) beweglich ist,
wobei radial zwischen dem Ständer (12) und dem Anker (15) zumindest abschnittsweise ein Luftspalt (19) ausgebildet wird,
**gekennzeichnet durch**
eine Mehrzahl von Magneten (16), vorzugsweise von Permanentmagneten (16), welcher am Ständer (12) und/oder am Anker (15) in Umfangsrichtung (U) nebeneinander angeordnet sind,
wobei die Magnete (16) ausgerichtet sind, so dass der magnetische Fluss (B) jedes Magneten (16) im Wesentlichen radial und mit der gleichen Richtung des magnetischen Flusses (B) ausgerichtet ist,
wobei die Magnete (16) gegenüber dem Luftspalt (19) und/oder gegenüber dem Anker (15) oder gegenüber dem Ständer (12) eben ausgebildet sind.

2. Elektromagnetischer Linearaktor (1) nach Anspruch 1, **dadurch gekennzeichnet, dass**
die Magnete (16) zumindest teilweise als Quader oder als Quader mit bogenförmiger radialer Außenseite (16a) ausgebildet sind.

3. Elektromagnetischer Linearaktor (1) nach Anspruch 1 oder 2, **dadurch gekennzeichnet, dass**
die Magnete (16) lediglich am Anker (15) angeordnet sind.

4. Elektromagnetischer Linearaktor (1) nach einem der vorangehenden Ansprüche, **dadurch gekennzeichnet, dass**
der Anker (15) einen Ankerkern (15c, 15d) aufweist, welcher eine Mehrzahl von Magnetaufnahmen (15f) aufweist, welche in Umfangsrichtung (U) nebeneinander angeordnet sind,
wobei jede Magnetaufnahme (15f) wenigstens einen Magneten (16), vorzugsweise genau einen Magneten (16), aufweist,
wobei die Magnetaufnahmen (15f) zumindest abschnittsweise eben ausgebildet sind.

5. Elektromagnetischer Linearaktor (1) nach Anspruch 4, **dadurch gekennzeichnet, dass**
der Ankerkern (15c, 15d) eine Mehrzahl von Abstandshaltern (15e) aufweist, welche jeweils in Umfangsrichtung (U) zwischen zwei unmittelbar benachbarten Magnetaufnahmen (15f) angeordnet sind.

6. Elektromagnetischer Linearaktor (1) nach Anspruch 4 oder 5, **dadurch gekennzeichnet, dass**
wenigstens ein Abstandshalter (15e), vorzugsweise mehrere Abstandshalter (15e), besonders vorzugsweise alle Abstandshalter (15e), an einem unteren Ankerjoch (15a) oder an einem oberen Ankerjoch (15b) ausgebildet ist.

7. Elektromagnetischer Linearaktor (1) nach einem der Ansprüche 4 bis 6, **dadurch gekennzeichnet, dass**
wenigstens ein Abstandshalter (15e), vorzugsweise mehrere Abstandshalter (15e), besonders vorzugsweise alle Abstandshalter (15e), in der Längsrichtung (X) unterbrochen ausgebildet ist.

8. Elektromagnetischer Linearaktor (1) nach einem der Ansprüche 4 bis 7, **dadurch gekennzeichnet, dass**
der Ankerkern (15c, 15d) einen unteren Ankerkern (15c) und einen oberen Ankerkern (15d) aufweist, welche einstückig ausgebildet und zum Ankerkern (15a, 15d) verbunden sind.

9. Elektromagnetischer Linearaktor (1) nach einem der vorangehenden Ansprüche, **dadurch gekennzeichnet, dass**
der Anker (15) ein unteres Ankerjoch (15a) und ein oberes Ankerjoch (15b) aufweist, welche die Magnete (16) in der Längsrichtung (X) beidseitig radial umgreifen.

10. Elektromagnetischer Linearaktor (1) nach einem der vorangehenden Ansprüche, **dadurch gekennzeichnet, dass**
der Anker (15), vorzugsweise ein unterer Ankerkern (15c) samt unterem Ankerjoch (15a) und ein oberer Ankerkern (15d) samt oberen Ankerjoch (15c), (jeweils) durch einen gepressten Eisenpulverwerkstoff ausgebildet ist.
